# EUROPÄISCHE PATENTSCHRIFT

(11) **EP 1 664 595 B1**
(45) Veröffentlichungstag und Bekanntmachung des Hinweises auf die Patenterteilung: **05.10.2011**
(21) Anmeldenummer: 04741080.8
(22) Anmeldetag: 15.07.2004
(51) Int. Cl.: F16H 48/08, F16H 57/02, F16C 25/08

(54) **DIFFERENTIALGETRIEBE FÜR FAHRZEUGE**
DIFFERENTIAL GEAR FOR VEHICLES
ENGRENAGE DIFFERENTIEL POUR VEHICULES

(30) Priorität: 22.08.2003 DE 10338635
(43) Veröffentlichungstag der Anmeldung: 07.06.2006
(73) Patentinhaber: Bayerische Motoren Werke Aktiengesellschaft, 80809 München (DE); Schaeffler KG, 91074 Herzogenaurach (DE)
(72) Erfinder: RASTEL, Hans, 86949 Windach (DE); SCHINAGL, Stefan, Michigan; GIELISCH, Frank, 85757 Karlsfeld (DE); STEINBERGER, Wolfgang, 91074 Herzogenaurach (DE)
(86) Internationale Anmeldenummer: PCT/EP2004/007933
(87) Internationale Veröffentlichungsnummer: WO 2005/028924

(56) Entgegenhaltungen:
- EP-A- 0 603 510
- DE-A- 2 532 370
- DE-A- 19 517 955
- DE-A- 19 607 336
- DE-A- 19 946 383
- DE-A1- 2 532 370
- DE-A1- 19 517 955
- DE-U- 1 932 984
- DE-U- 1 932 984
- GB-A- 2 386 652
- US-A- 4 033 644
- US-A- 4 103 567
- US-A- 4 173 376
- US-A- 5 364 194

## Beschreibung

Die vorliegennde Erfindung betrifft ein Differentialgetriebe für Fahrzeuge gemäß dem Oberbegriff des Patentanspruches 1.

Ein derartiges Differentialgetriebe ist aus der gattungsmäβigen US 4 033 644 bekannt. Zum technischen Hintergrund der Erfindung gehören ferner die US 4 103 567, EP-A-0 603 510, US-A 536 4194, US-A 417 3376 sowie die GB-A 2-386 652.

Differentialgetriebe haben primär die Aufgabe, eine Eingangsdrehzahl bzw. ein Eingangsdrehmoment auf zwei mit Antriebsrädern verbundene Getriebeausgangswellen zu verteilen und dabei die bei Kurvenfahrten auftretenden Drehzahldifferenzen zwischen dem kurveninneren und dem kurvenäußeren Rad zu ermöglichen. Bei der Übertragung großer Antriebsleistungen können Differentialgetriebe sehr heiß werden. Aufgrund von Wärmedehnungen ändert sich dann häufig die Vorspannung der Lager über die der Differentialkorb im Differentialgetriebegehäuse gelagert ist. Ein Abfall der Lagervorspannung im Differentialgetriebe wirkt sich negativ auf das akustische Verhalten aus, das heißt Verzahnungsgeräusche werden lauter. Außerdem besteht die Gefahr, dass sich die Lebensdauer des Differentialgetriebes bei einer Änderung der Lagervorspannung verringert.

Aus der DE 199 46 383 A1 und der DE 196 07 336 A1 sind verschiedene Möglichkeiten zur Erzeugung bzw. Aufrechterhaltung einer Lagervorspannung bekannt. Eine Vorspannkraft kann beispielsweise hydraulisch, durch Spiralfedern, Tellerfedern etc. erzeugt werden.

Aufgabe der Erfindung ist es, ein Differentialgetriebe zu schaffen, bei dem die Lagervorspannung des im Differentialgetriebegehäuse drehbar gelagerten Differentialkorbs auch bei unterschiedlichen Betriebstemperaturen möglichst optimal bleibt.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Die Erfindung geht von einem an sich bekannten Differentialgetriebe für Fahrzeuge aus, das einen Getriebeeingang und zwei Getriebeausgangswellen aufweist, die auf einander gegenüberliegenden Seiten aus dem Differentialgetriebegehäuse austreten. In dem Differentialgetriebegehäuse ist im Bereich zwischen den Getriebeausgangswellen ein Differentialkorb angeordnet. Der Differentialkorb ist durch eine Lageranordnung, welche eine durch die Montage vorgegebene axiale Lagervorspannung aufweist, drehbar in dem Differentialkorb gelagert. Die Lager der Lageranordnung weisen jeweils einen Lageraußenring auf. Zur Erzeugung der Lagervorspannung ist mindestens eine Tellerfeder vorgesehen.

Das Grundprinzip der Erfindung besteht darin, dass es sich bei der Lageranordnung um eine Kugellageranordnung handelt, die Kugellager aufweist, dass die Lageraußenringe drehfest im Bezug auf das Differentialgetriebegehäuse angeordnet sind und dass das Differentialgetriebegehäuse aus einem Aluminiumwerkstoff besteht.

Durch die mindestens eine Tellerfeder ist sichergestellt, dass die Achse alle Lagervorspannung auch bei temperaturbedingten Wärmedehnungen einzelner Differentialgetriebegehäusekomponenten im Wesentlichen konstant bleibt.

Aluminiumgehäuse haben den Vorteil, dass sie im Vergleich zu anderen Gusswerkstoffen ein relativ ...
geringes spezifisches Gewicht aufweisen. Probleme bereitet jedoch häufig der relativ große Wärmeausdehnungskoeffizient von Aluminium, was bei der Verwendung herkömmlicher Lagerungskonzepte zu einem starken Abfall der Lagervorspannung im Differentialgetriebe führen kann. Durch die Verwendung mindestens einer Tellerfeder können selbst relativ starke Wärmedehnungen von Aluminiumgehäusen kompensiert und die Lagervorspannung selbst bei hohen Betriebstemperaturen nahezu konstant gehalten werden.

Die Kugellageranordnung ist durch Kugellager gebildet deren Lageraußenringe feststehend mit dem Differentialgetriebegehäuse verbunden sind und deren Lagerinnenringe auf Wellenabschnitte des Differentialkorbs aufgeschoben sind. Die mindestens eine Tellerfeder ist zwischen dem Differentialgetriebegehäuse und einem der Lageraußenringe der Kugellager angeordnet.

Bei den Kugellagern kann es sich um Schrägkugellager handeln. Die Schrägkugellager können in X-Anordnung angeordnet sein.

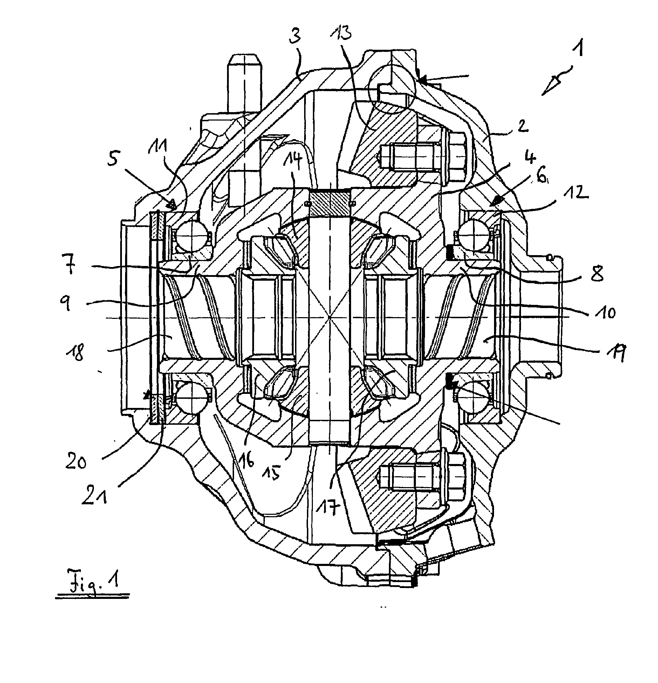

Im folgenden wird die Erfindung im Zusammenhang mit der Zeichnung näher erläutert. Die einzige Figur 1 zeigt das Grundprinzip der Erfindung.

Figur 1 zeigt ein Differentialgetriebe 1 mit einem zweiteiligen Differentialgetriebegehäuse, das durch die beiden Gehäusehälften 2, 3 gebildet ist. In dem Differentialgetriebegehäuse 2, 3 ist ein Differentialkorb 4 angeordnet. Der Differentialkorb 4 ist über Schrägkugellager 5, 6 drehbar im Differentialgetriebegehäuse 2, 3 gelagert, wobei Innenringe 7, 8 der Schrägkugellager 5, 6 auf Wellenabschnitte 9, 10 des Differentialkorbs 4 aufgeschoben sind und Lageraußenringe 11, 12 der Schrägkugellager 5, 6 drehfest in Bezug auf das Differentialgetriebegehäuse 2, 3 angeordnet sind.

Über ein Tellerrad 13 kann Drehmoment in den Differentialkorb eingeleitet werden. Das Drehmoment wird über Ausgleichsräder 14, 15, die drehbar im Differentialkorb 4 gelagert sind, auf Kegelräder 16, 17 übertragen, die mit den Enden von Getriebeausgangswellen 18, 19 verbunden sind. Die Ausgleichsräder 14, 15 ermöglichen eine Relativdrehung der Getriebeausgangswellen 18, 19, was zum Beispiel bei einer Kurvenfahrt erforderlich ist.

Für einen einwandfreien Betrieb des Differentialgetriebes ist es erforderlich, dass die Schrägkugellager 5, 6, die hier in X-Anordnung angeordnet sind, eine gewisse Lagervorspannung aufweisen. Die Schrägkugellager 5, 6 stützen sich mit ihren Innenringen 7, 8 an Schultern des Differentialkorbs 4 ab. Der Außenring 12 des Schrägkugellagers 6 stützt sich unmittelbar an einer Schulter des Gehäuseteils 2 ab. Zwischen dem Außenring 11 des Schrägkugellagers 5 und dem Gehäuseteil 3 ist eine Tellerfeder 20 und eine Distanzscheibe 21 angeordnet. Die Tellerfeder 20 überträgt über die Distanzscheibe 21 eine Axialkraft auf den Außenring 11 des Schrägkugellagers, wodurch die gesamte Kugellageranordnung axial verspannt wird. Der Lageraußenring 11 weist hierzu in Bezug auf das Gehäuseteil 3 eine Spielpassung auf. Demgegenüber weist der Lagerring des Schrägkugellagers 6 in Bezug auf das Gehäuseteil 2 eine Presspassung auf.

Während des Betriebs heizt sich das Differentialgetriebe 1 auf, was zu einer Wärmedehnung der einzelnen Getriebekomponenten, insbesondere der Getriebegehäuseteile 2, 3 führt. Ohne die Tellerfeder 20 würde eine Wärmedehnung des Differentialgetriebegehäuses 2, 3 zu einer Verringerung der Lagervorspannung der Schrägkugellager 5, 6 führen. Mit der Tellerfeder 20 wird erreicht, dass die Lagervorspannung auch bei hohen Betriebstemperaturen nahezu konstant gehalten wird, was für einen ruhigen Lauf der Verzahnungen und eine hohe Lebensdauer erforderlicht ist.

## Patentansprüche

1. Differentialgetriebe (1) für Fahrzeuge, mit einem Getriebeeingang (13) und zwei Getriebeausgangswellen (18, 19), die auf einander gegenüberliegenden Seiten eines Differentialgetriebegehäuses (2, 3) aus dem Differentialgetriebegehäuse (2, 3) austreten,
einem Differentialkorb (4), der im Differentialgetriebegehäuse (2, 3) im Bereich zwischen den Getriebeausgangswellen (18, 19) angeordnet ist, wobei der Differentialkorb (4) durch eine Lageranordnung (5, 6), welche eine Lagervorspannung aufweist, drehbar in dem Differentialgetriebegehäuse (2, 3) gelagert ist, und mindestens eine Tellerfeder (20) vorgesehen ist, welche die Lagervorspannung der Lageranordnung (5, 6) erzeugt,
**dadurch gekennzeichnet,**
• **dass** die Lageranordnung eine Kugellageranordnung ist, die Kugellager (5, 6) aufweist, deren Lageraußenringe (11, 12) drehfest in Bezug auf das Differentialgetriebegehäuse (2, 3) angeordnet sind, und
• **dass** das Differentialgetriebegehäuse (2, 3) aus einem Aluminiumwerkstoff besteht,
• **dass** die mindestens eine Tellerfeder (20) zwischen dem Differentialgetriebegehäuse (3) und einem der Lageraußenringe (11) angeordnet ist,
• das Differentialgetriebegehäuse (3) und der eine Lageraußenring (11), welchem die Tellerfeder (20) zugeordnet ist, eine Spielpassung bilden,
• **dass** zwischen der Tellerfeder und dem einen Lageraußenring (11) eine Distanzscheibe (21) angeordnet ist.

2. Differentialgetriebe (1) nach Anspruch 1, wobei die Kugellageranordnung (5, 6) mindestens zwei Schrägkugellager auf weist.

3. Differentialgetriebe (1) nach Anspruch 2, wobei die Schrägkugellager (5, 6) in X-Anordnung angeordnet sind.

4. Differentialgetriebe (1) nach einem der Ansprüche 1 bis 3, wobei an dem Differentialkorb (4) Ausgleichsräder (14, 15) gelagert sind, welche mit zugeordneten Kegelrädern (16, 17) der Getriebeausgangswellen (18, 19) kämmen und eine Relativdrehung der Getriebeausgangswellen (18, 19) ermöglichen.

## Claims

1. A differential gear (1) for vehicles, with a gear input (13) and two gear output shafts (18, 19), which exit from a differential gear housing (2, 3) on mutually opposite sides of the differential gear housing (2, 3),
a differential holder (4), which is arranged in the differential gear housing (2, 3) in the region between the gear output shafts (18, 19), wherein the differential holder (4) is rotatably mounted in the differential gear housing (2, 3) by a bearing arrangement (5, 6) which has a bearing prestressing, and at least one disc spring (20) is provided, which produces the bearing prestressing of the bearing arrangement (5, 6), -
**characterized in that**
• the bearing arrangement is a ball bearing arrangement, which has ball bearings (5, 6), the bearing outer races (11, 12) of which are arranged non-rotatably with respect to the differential gear housing (2, 3), and
• the differential gear housing (2, 3) comprises an aluminium material,
• the at least one disc spring (20) is arranged between the differential gear housing (3) and one of the bearing outer races (11),
• the differential gear housing (3) and the one bearing outer race (11), with which the disc spring (20) is associated, form a loose fit,
• a spacer (21) is arranged between the disc spring and the one bearing outer race (11).

2. A differential gear (1) according to Claim 1, wherein the ball bearing arrangement (5, 6) has at least two angular ball bearings.

3. A differential gear (1) according to Claim 2, wherein the angular ball bearings (5, 6) are arranged in an X arrangement.

4. A differential gear (1) according to one of Claims 1 to 3, wherein compensating gears (14, 15) are mounted on the differential holder (4), which compensating gears (14, 15) mesh with associated bevel gears (16, 17) of the gear output shafts (18, 19) and permit a relative rotation of the gear output shafts (18, 19).

## Revendications

1. Différentiel (1) de véhicule comportant une entrée (13) et deux arbres de sortie (18, 19) sortant des côtés opposés du boîtier de différentiel (2, 3),
- une cage de différentiel (4) étant installée dans le boîtier de différentiel (2, 3) dans la zone située entre les arbres de sortie (18, 19), la cage (4) étant montée à rotation dans le boîtier de différentiel (2, 3) par un dispositif de palier (5, 6) avec une précontrainte de palier, avec au moins un ressort Belleville (20) qui génère la précontrainte exercée sur le palier (5, 6),
différentiel **caractérisé en ce que**
- le dispositif de palier est un palier à billes comportant des paliers à billes (5, 6) dont les bagues extérieures (11, 12) sont solidaires en rotation du boîtier de différentiel (2, 3), et
- le boîtier de différentiel (2, 3) est en aluminium,
- au moins un ressort Belleville (20) est prévu entre le boîtier de différentiel (3) et l'une des bagues extérieures (11),
- le boîtier (3) du différentiel et une bague extérieure (11) associée au ressort Belleville (20) constituent un ensemble d'adaptation de jeu,
- une rondelle d'écartement (21) est prévue entre le ressort Belleville et l'une des bagues extérieures (11).

2. Différentiel (1) selon la revendication 1,
**caractérisé en ce que**
le dispositif de paliers à billes (5, 6) comporte au moins deux paliers à billes obliques.

3. Différentiel (1) selon la revendication 2,
**caractérisé en ce que**
les paliers à billes obliques (5, 6) sont installés suivant un montage en X.

4. Différentiel (1) selon l'une des revendications 1 à 3,
**caractérisé en ce que**
la cage (4) du différentiel comporte des pignons de compensation (14, 15) engrenant avec des pignons coniques (16, 17) associés, portés par les arbres de sortie (18, 19) et permettant un mouvement de rotation relative des arbres de sortie (18, 19).
